# EUROPEAN PATENT SPECIFICATION

(11) **EP 2 312 413 B1**
(45) Date of publication and mention of the grant of the patent: **17.04.2013**
(21) Application number: 10187945.0
(22) Date of filing: 18.10.2010
(51) Int. Cl.: F02D 29/02, F02D 33/00, G05D 9/12, F02M 37/22

(54) **Fuel filtration monitoring system**
Brennstofffilterungsüberwachungssystem
Système de diagnostique de filtration de carburant

(30) Priority: 19.10.2009 GB 0918257; 19.10.2009 GB 0918248
(43) Date of publication of application: 20.04.2011
(73) Proprietor: Nissan Motor Manufacturing (UK) Ltd., Bedford Bedfordshire MK43 0DB (GB)
(72) Inventor: Diaz, Pedro, 08040 Barcelona (ES)

(56) References cited:
- EP-A2- 0 671 631
- EP-A2- 1 909 236
- WO-A1-01/33069
- US-A- 4 491 143
- US-A1- 2003 085 180
- US-A1- 2008 150 552

## Description

The invention relates to a system for monitoring the level of water in a fuel filter for an internal combustion engine, and in particular, but not exclusively, to a system comprising a fuel filter for a diesel engine which is capable of monitoring the level of water retained in the filter; and further comprising a fuel tank level sensor, a control means, and a vehicle GPS system; which together can record the source of contaminated fuel added to the vehicle fuel tank. Aspects of the invention relate to a system for monitoring the level and source of water in a fuel filtration apparatus, to a method of purging water, and to a vehicle.

Road vehicles are typically powered by internal combustion engines fuelled by petrol or by diesel, with a small minority using an ethanol-based fuel. The market for diesel vehicles is increasing, largely due to their increased fuel efficiency over petrol vehicles.

This increase in diesel vehicle sales over petrol vehicle sales is resulting in an increase in the occurrence of vehicle problems related to diesel fuel contamination and in particular, contamination with water. Many fuel system and engine components in a diesel engine rely on the lubricating properties of diesel to lubricate their surfaces and maintain their performance. If the fuel is contaminated with water, these lubricating properties are diminished, leading to excessive wear and ultimately, to premature component failure. Generally speaking, diesel is immiscible in water, but a small proportion of water may be absorbed by diesel and held in suspension. Water contamination of diesel in trace quantities does not generally harm the fuel system components, trace quantities of up to 50 ppm (parts per million) of water in diesel are within typically acceptable limits. However, if the water content exceeds 200 ppm then there is an increased risk of premature wear.

Whilst water can contaminate the diesel at any time following its manufacture, it is most common for water to be introduced into the diesel while it is held in tanks at the filling station prior to being sold on the forecourt. This is often due to the accumulation of condensation in the tanks or, in some instances the tanks may be damaged, allowing ground water to seep into the tank.

Increasing the water content in the diesel reduces the calorific content of the fuel, leading to a reduction in the fuel economy of the vehicle. Furthermore, high water content diesel can cause deterioration of the engine and fuel system components due to corrosion which, in combination with the reduction in lubrication, can lead to advanced failure of fuel pumps and can also present problems with the fuel injectors.

In some developing countries, diesel fuel has been sold with water contamination levels up to 10% of the total volume in extreme cases. Clearly, modern diesel engines could not survive long if supplied with such heavily contaminated fuel without some way to separate the water from the diesel before it reaches the engine. A known solution to this problem is to provide a fuel filter with a collection trough for collecting water which can be drained when the vehicle is next serviced. Whilst this solution is practical in environments where only a very small volume of water is found in the diesel, the fuel filter can soon be overwhelmed with water where a substantial volume of water is found in the diesel.

If the supply of diesel fuel is contaminated with as much as 10% water, a water purge every 10 000 to 15 000 miles or so (being the regular vehicle service interval) is entirely inadequate in preventing the problems described above. In the case of such extreme water contamination of the fuel, the water collection trough in such a filter would be overwhelmed after just one tank of fuel had passed through the filter. In such cases the vehicle user, such as the driver, may not realize that the supply of fuel is to blame for the subsequent degradation of vehicle performance, and the vehicle may potentially suffer repeated damage if the user continues to use the same source of contaminated fuel. Such scenarios are not uncommon in some markets. This leads to high warranty costs on behalf of the vehicle manufacturer, and an understandable reluctance by the market to adopt modern engine technologies whose reputation for reliability is unfairly tarnished by reports of breakdowns.

It is known to provide a system which delivers a visual warning of water above a predetermined level in a fuel filter. US 2003/085,180A1 discloses such a system, which further records instances of the light (visual warning) being illuminated for a time or distance greater than a threshold value. This information is stored, and can be used to determine validity of warranty claims on engine components. US 2008/150,552A1 also discloses an alarm which is triggered by excess water in a fuel filter. When the water reaches a second, more critical level, action may be taken to limit damage to the engine - e.g, limiting maximum engine speed. Warning information is stored for later retrieval. EP 1,909,236A2 discloses a system for storing the location of a vehicle when an error condition is detected. This error condition may be a low fuel level -for example, one gallon remaining in the tank.

EP 0,671,631 A2 discloses a vehicle diagnostic apparatus which records fault codes and the geographical locations where they occurred for later retrieval. These fault codes are described only in general terms, e.g. fuel system; and may be transmitted by a telephone network. US 4,491,143 discloses a fuel pump, fuel filter, and sensors, arranged so as to shut down fuel supply to the fuel pump when the water level in the fuel filter reaches a critical level. WO 01/033,069A1 discloses a bleed unit which automatically drains water from a collection chamber in a vehicle fuel filter, when said water reaches a predetermined level.

It will be noted that none of the above disclosures offer any indication of the source of contaminated fuel.

It is an object of the present invention to at least mitigate some of the above problems.

According to an aspect of the invention there is provided a system for monitoring the level of water in a fuel filtration apparatus for an internal combustion engine of a vehicle, the apparatus having a fuel filter comprising a main body including a fuel inlet, a fuel outlet and a water collection portion, the water collection portion including a sensor for determining the level of water within the water collection portion; the system further comprising:
a control means; and
a fuel tank having a fuel volume sensor arranged to determine the volume of fuel stored within the fuel tank; and
a global positioning system (GPS) arranged to determine the location of the apparatus; wherein:
   the control means is arranged to generate a warning or fault code comprising the location of the apparatus if the level of water in the water collection portion exceeds a pre-determined level;
characterized in that:
the system is arranged to determine the source of contaminated fuel, in that:
   the control means is in communication with the fuel volume sensor, and stores the location of the system upon determining an increase in the volume of fuel stored in the tank; and in that:
      the warning or fault code generated by the control means further comprises the location of the system when the control means determined an increase in the volume of fuel stored in the tank.

The water level warning sensor allows the user of the vehicle to monitor the volume of water within the fuel filter. By allowing the level of water in the filter to be monitored, the vehicle user is able to ensure that the filter is purged of water before the water rises to a level where it would overwhelm the filter with the attendant risk of water contaminating the fuel system. This greatly reduces the risk of serious damage to the fuel system and engine.

The control means and GPS system allow the user to determine the source of contaminated fuel so that they may avoid using that source in the future.

In an example, the monitoring system comprises a memory, arranged to store the warnings generated by the control means, and wherein the warnings are stored on the memory in the form of fault codes.

Advantageously, the memory is configured to provide the system with a diagnostic function which may be interrogated during regular maintenance of the system, allowing maintenance personnel to determine the frequency of use by the user of a contaminated fuel source. A memory arranged to store data relating to the water level in the filter and the location of the system at the time, may provide valuable field data for the development of future fuel systems. Additionally, this data may be used by the relevant authorities to police contaminated fuel sources.

In an example, the monitoring system comprises a warning indicator, wherein the warning generated by the control means is made known to the user by the warning indicator.

Advantageously, this system allows the user to be continually informed of the level of water within the fuel filter, ensuring that the user takes the appropriate action to purge water from the filter before the level of water in the filter causes damage to the fuel system or to the engine. In addition, the provision of a warning indicator provides the user with an increased level of detail regarding the condition of the fuel filter and thus the quality of the fuel. This serves to provide the user with increased notice of impending maintenance requirements and allows them to plan a suitable maintenance schedule accordingly.

In an example, the warning comprises an identification of the location of the system when the pre-determined level of water was exceeded.

In an example, the sensor defines at least two level probes, each probe being arranged to detect the presence of water at a respective predetermined level.

In an example, the level sensor defines four level probes.

In an example, the level probes comprise a conductivity probe.

In an example, the fuel filtration apparatus comprises a conductive base arranged in use to connect electrically to each conductivity probe when the water reaches the respective predetermined level.

Advantageously, the provision of a sensor with at least two predetermined probes allows the user to have advanced warning of the rising water level in the filter.

In an example, the control means is configured to record the location of a filling station upon filling of the vehicle fuel tank, the controller being further configured to generate an indication to the user of a partial volume of water within the volume of fuel acquired from said filling station.

Advantageously, this allows the user of the vehicle to monitor the quality of the diesel purchased from various filling stations, and thereby to avoid repeated use of filling stations selling fuel contaminated with water. This ensures that the quality of the diesel fuel used is as high as possible.

In an example, the fuel filter comprises a purge valve for automatically draining water from the filter.

Advantageously, this feature allows the water to be automatically purged from the filter before the water rises to a level where it would overwhelm the filter with the attendant risk of water contaminating the fuel system downstream of the fuel filter. This greatly reduces the risk of damage to the fuel system and to the engine.

Preferably, the purge valve opens upon the water level reaching a first predetermined level; and closes when the water lowers to a second predetermined level.

According to a further aspect of the present invention, there is provided a method of purging water from a fuel filter for an internal combustion engine of a vehicle, said vehicle comprising a control means and a global positioning system arranged to determine the location of the vehicle, the method including the steps of:
providing a fuel filter having a main body including a fuel inlet, a fuel outlet and a purge valve for draining water from the filter;
opening the purge valve when the level of water reaches a first predetermined level; and closing the purge valve when the level of water lowers to a second predetermined level.

The purge valve may be opened and/or closed automatically. Purging may start when the water level has exceeded a pre-determined threshold, and cease when the water level has fallen below a second pre-determined threshold as a result of the purging. The water levels may be determined by sensors. These actions may occur in response to signals from the control means.

In an example, the water purged from the fuel filter may be supplied to an exhaust system and/or an intake system of the internal combustion engine, according to determined operating conditions of said engine, to ensure safe venting of the water to the atmosphere.

In an example, the purged water may be supplied to the exhaust system if the engine is warm but running under light load conditions; or to the intake system if the engine has reached full operating temperature, and is running under heavy load conditions.

According to a further aspect of the present invention, there is provided a vehicle comprising a fuel filtration monitoring system according to any of the preceding paragraphs.

The invention will now be described by way of example only and with reference to the following figures in which:
Figure 1 shows a schematic view of a system for monitoring the level of water in a vehicle fuel filter according to the present invention;
Figure 2 is a partial sectioned view of a fuel filtration apparatus according to the present invention;
Figure 3 is a partial section detailed view of a purge portion of the fuel filtration apparatus of figure 2;
Figure 4 is a partial sectioned view of a fuel filtration apparatus according to a further aspect of the present invention;
Figure 5 is a partial section detailed view of a purge portion of the fuel filter of Figure 4;
Figure 6 is a schematic view of an example of a control-logic arrangement for controlling the fuel filtration apparatus of Figure 4; and
Figure 7 is a schematic view of an example of the installation of a fuel filtration apparatus according to Figure 4 in a fuel system of an internal combustion engine.

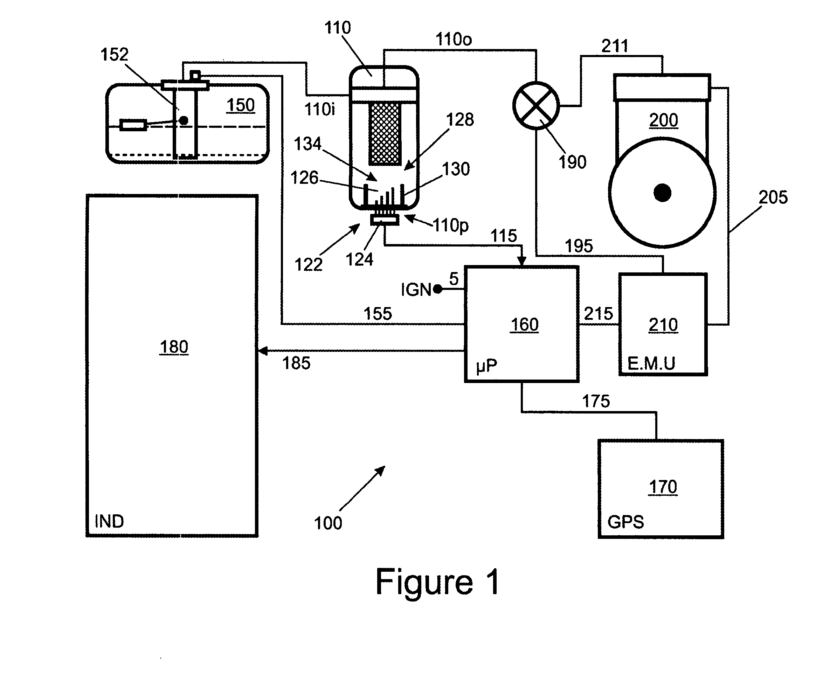

Figure 1 shows a schematic view of an example of a system 100 for monitoring the level of water in a fuel filtration apparatus according to the present invention.

The system shown in Figure 1 comprises a fuel tank 150, fuel filter 110, a fuel pump 190, an internal combustion engine 200, an engine management unit 210, a global positioning system or GPS 170, system control means 160 and a warning indicator 180. In Figure 1, fuel lines are represented by thick lines and communication or electrical connections are represented by thin lines.

Fuel is supplied from the fuel tank 150 to the fuel filter 110 via a fuel inlet line 110i. Filtered fuel is drawn through the filter 110 by the pump 190. The pump 190 is supplied with fuel by a fuel outlet line 110o. The fuel pump 190 delivers fuel at the desired pressure to the internal combustion engine 200 via a fuel line 211, in dependence on a fuel pump command 195, controlled by the engine management unit 210.

The engine management unit 210 controls the operation of the engine 200 via an engine management harness 205. The engine management unit 210 not only controls the operation of the engine 200 but also monitors, via the engine management harness 205, numerous physical parameters such as coolant temperature and engine speed. The engine management unit 210 communicates with the control means 160 via an engine status communication line 215.

The fuel filter 110 comprises a purge portion 122, a purge line connector 124, a sensor portion 126, a trough 128, a cup 130 and a level sensor 134, the purposes of which will be explained later. Also indicated in the Figure is the location of a purge line 110p, through which water separated from the fuel may be drained from the filter 110 in use. The level sensor 134, comprising a plurality of sensor probes, sends information regarding the water content of the fuel via a sensor link 115 to the control means 160.

The control means 160 is first activated in dependence on the user activating the engine 200 via a suitable engine management control such as an ignition switch (not shown). The control means 160 is connected to said engine management control via an ignition line 5. Upon activation, the control means 160 is arranged to perform a self diagnostic routine and to perform a status diagnostic routine on the components of the system 100. If a problem is identified by the control means 160 with any of the components of the system 100 during the diagnostic routine, a fault code is generated by the control means 160 and displayed on the warning indicator 480.

The control means 160 is in constant communication with the sensor link 115 in use. If the level sensor 134 indicates that the level of water contained within the filter 110 is above a pre-determined threshold, the control system will intervene and will not permit the engine management unit 210 to initiate start-up of the engine 200 until the water has been purged from the fuel filter 110. This prevents the user inadvertently attempting to start the engine 200 with water in the filter 110 or fuel outlet line 110o.

The fuel tank 150 comprises a fuel sender assembly 152. The sender assembly 152 has a float mounted to a pivoted arm supported on a fuel level sensor. The position of the float varies relative to the fuel tank 150 in dependence on the level of fuel held within the tank 150. The sender assembly 152 sends fuel level information to the control means 160 via a sender harness 155. The control means 160 is arranged to determine a change in the volume of fuel held in the tank 150. If the user adds fuel to the tank 150, then the control means 160 will detect an increase in fuel volume by the information sent to the control means 160 by the sender assembly 152 via the sender harness 155.

In the example shown in Figure 1, the control means 160 is in communication with the warning indicator 180. The warning indicator 180 is arranged to display to the user information regarding the volume of fuel stored in the tank 150 and the approximate proportion of water contamination within that fuel. The warning indicator 180 receives information from the control means 160 via a warning output line 185.

The control means 160 is in communication with the GPS 170 via a GPS link 175. The control means 160 may be arranged to monitor the output of the GPS 170 constantly or in response to a pre-determined trigger. An appropriate trigger may be when the control means 160 determines that the fuel volume held within the tank 150 has increased. In this case, the control means identifies the location of the system 100 from the information sent by the GPS 170 via the GPS link 175 and generates a unique code. If the control means 160 is forced to intervene in the start-up of the engine 200 the user will be notified by a warning displayed on the warning indicator 180.

The code generated by the control means 160 may comprise information such as time, date, location and approximate volume of fuel added to the tank 150. In this way, service personnel analysing the code during vehicle maintenance can identify when contaminated fuel was used and the location of the filling station where the user acquired it.

By communication with the engine management unit 210 and the sender assembly 152, the control means 160 is able to generate an indicator of a partial volume of water within the fuel tank 150. This information may be presented to the user in the form of a bar graph or similar graphical approximation of the percentage of water contamination in the fuel. This information may be stored by the processor and downloaded from the system 100 via a suitable diagnostic tool during scheduled maintenance at an authorised service facility.

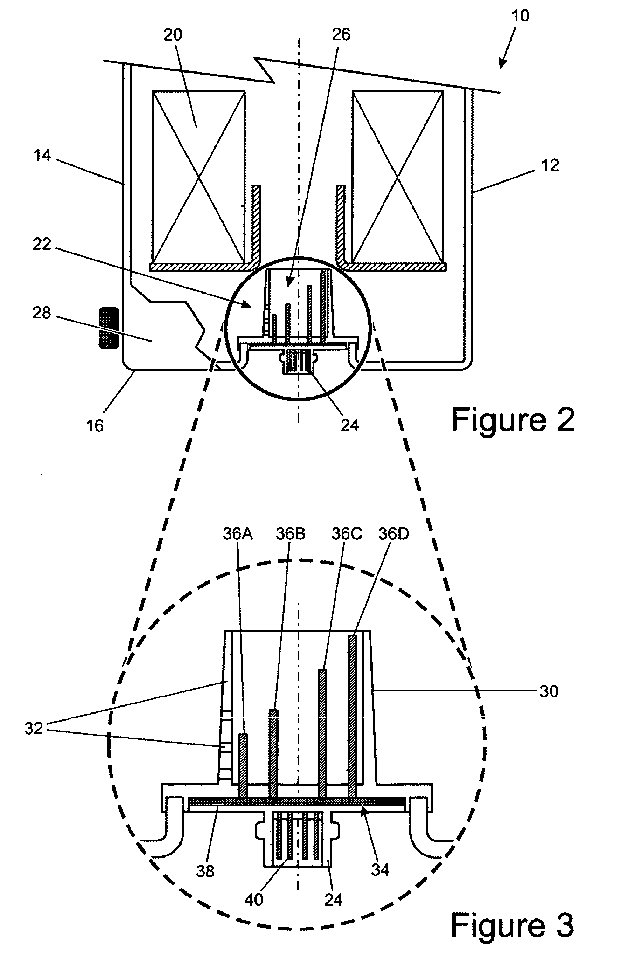

Figure 2 shows an example of a fuel filtration apparatus for an internal combustion engine of a vehicle according to the present invention. It will be noted that like reference numbers have been used for components like those in Figure 1 to aid clarity. The fuel filtration apparatus comprises a fuel filter 10. The fuel filter 10 is shown having an outer casing in the form of main body 12 which has an upright cylindrical wall 14, a base 16 and a top comprising a fuel inlet and outlet (not shown for clarity). The outer casing 12 surrounds a cylindrical filter element 20 which extends between the base 16 and the top of the filter 10.

Positioned at the centre of the base 16 is a purge portion indicated generally at 22 having a purge line connector 24 and a sensor portion indicated generally at 26, the purpose of which will be described in greater detail shortly. The sensor portion 26 is raised above the base 16 of the filter 10 to form a circumferential trough 28 which acts as a collection point for water entering the filter 10 as will be described in greater detail shortly. The fuel filter is connected to a fuel line (not shown) by way of the fuel inlet and outlet in a known manner.

Turning now to Figure 3 which shows the purge portion 22 in greater detail, a cup 30 extends towards the top from the base 16 and defines a series of apertures 32. Positioned within the sensor portion 26 is a level sensor indicated generally at 34. The sensor has a series of level probes in the form of conductive probes 36A, 36B, 36C, 36D which are positioned within the cup 30. The four conductive probes each have a conductive tip (not shown for clarity) which is electrically connected to a sensor base strip 38. The four conductive probes 36 each have a different height within the cup 30 the purpose of which will be described in further detail shortly. The sensor base strip 38 is electrically linked to a sensor connector 40 positioned on an inner surface of the purge line connector 24 to transmit water level data from the level sensor to a control means (160, Fig. 1). The conductive probes 36 and the sensor base strip 38 are formed from a printed circuit board (PCB) or other known manufacturing process.

In use, fuel is pumped into the fuel filter 10 by a fuel pump (190, Fig. 1) and enters the filter 10 via the inlet (not shown). The fuel is then directed through the filter element 20 before exiting the fuel filter 10 via the fuel outlet at the top of the filter 10. Upon entry to the filter 10, any water contained in the diesel settles initially in the trough 28 as a result of the relative densities of the water and diesel. Over time, the level of the water collecting in the trough 28 will increase as the water contained in the diesel entering the fuel filter separates out from the diesel to pool in the base of the filter 10. Once the trough 28 is full water begins to settle in the base of the cup 30.

As soon as the water reaches the conductive tip of the first conductive probe 36A, an electric circuit will be completed between the conductive tip and the sensor base strip 38 via the water. This causes a signal to be transmitted via the sensor connector 40 to the control means. The control means is arranged to calculate the extent to which the diesel has been contaminated by water, based on the time taken for each conductive tip to register contact with water, and on the volumetric flow of fuel through the filter. This information may be used by maintenance personnel to diagnose potential vehicle problems early and may be displayed to the vehicle user to inform them, by a visual dashboard warning, a vehicle fault code, and/or an audible warning, that the level of water in the fuel filter 10 has reached a first level. Accordingly, as the level of water within the fuel filter 10 rises, so the conductive tips of the successive conductive probes 36B, C, D generate signals via the sensor connector 40 to warn the user of the increasing water level.

In this way, the user of the vehicle is able to monitor whether the level of water within the fuel filter 10 is approaching a critical level at which damage may be done to the fuel management system or to the engine. The user may then take appropriate action, either to purge the water from the fuel filter 10 themselves or to seek assistance at a qualified service station or authorised main dealer. Furthermore the provision of four level probes allows the user a better indication of the extent of the problem, that is to say how quickly the filter 10 is filling with water. This will have the desired effect of reducing the risk of component failure or accelerated component wear whilst informing the user of behaviour, such as use of filling stations supplying contaminated fuel, which has an adverse affect on the reliability and performance of the vehicle.

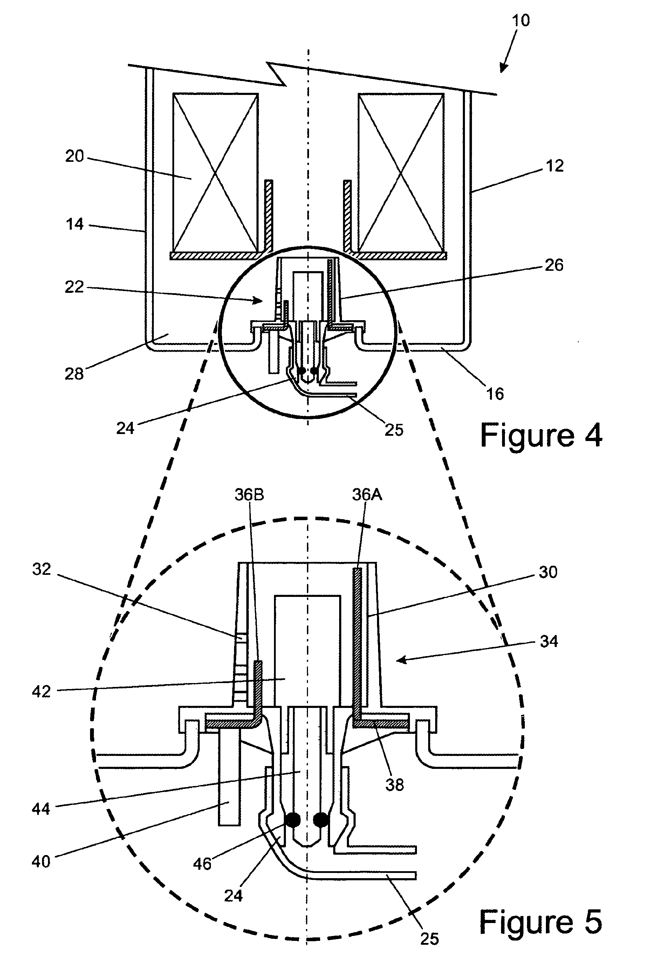

Figure 4 is very similar to Figure 2. In this case, sensor 26 has only two conductive probes; but a fuel purge line 25 is shown attached to purge line connector 24.

Figure 5 is very similar to Figure 3, so again, only the differences will be highlighted. Positioned within the sensor portion 26 is a level sensor indicated generally at 34 and a purge valve 42, comprising lifting plunger 44 and O-ring seal 46. In this case, sensor 26 has two level probes 36A and 36B. The sensor base strip 38 is electrically linked to a sensor connector 40 positioned on an outer surface of the base 16 to transmit water level data from the level sensor to the control means. In this case, when the water reaches the first probe 36A, the control means opens the purge valve 42 to allow the water to exit the filter 10 via the purge line 25. As soon as the signal is received that the water has lowered to the level of the second probe 36B, the control means closes the purge valve 42. In this way, the level of water collected in the trough 28 is continually monitored and the level of water within the fuel filter 10 is maintained below a level which could otherwise result in damage to the fuel management system or the engine.

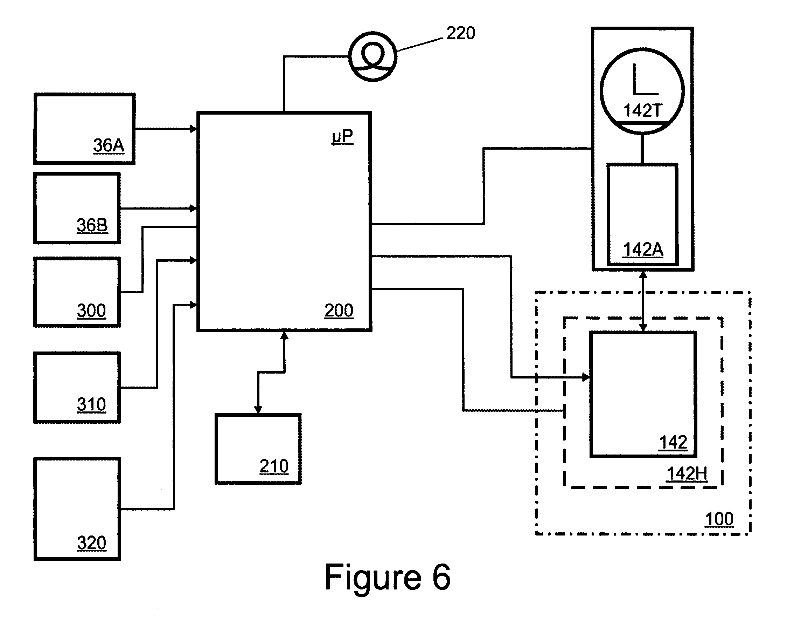

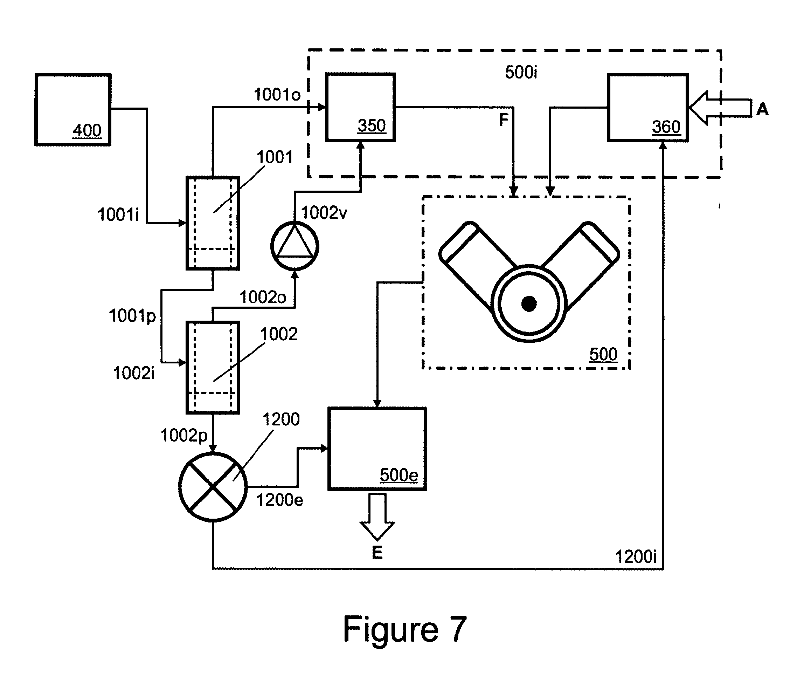

Figure 6 shows a schematic view of an example of a control-logic arrangement for controlling the fuel filter of Figures 4 and 5. In the examples shown in Figure 6 and Figure 7, like features have been given like reference numerals for clarity.

In the schematic view shown in Figure 6, a fuel filter 100 is controlled by a purge controller or processor 200. The filter 100 shares all the features of filter 10 shown in Figures 4 and 5. The fuel filter 100 comprises a purge valve 142 and a means for identifying the status of the purge valve in the form of a purge valve sensor 142A. The sensor 142A is configured to monitor the position of the purge valve 142, to determine if the valve 142 is in the open or closed position. Additionally, the sensor 142A may be arranged to monitor the temperature of the valve 142 or any other parameter that may be pertinent to the application in which the filter 100 is used.

The processor 200 monitors the output from the first level probe 36A, the second level probe 36B and may additionally communicate with a variety of other devices as required to optimize the performance of the filter 100. In the case of the example shown in Figure 6, the processor 200 is in communication with a temperature sensor 310 arranged to determine the ambient temperature surrounding the filter 100, an engine management unit 300 arranged to control the supply of fuel to an engine and a fuel pump 320 arranged to cause a flow of fuel through the filter. The processor 200 monitors that the fuel pump 320 is running and that the engine management unit 300 is active and controls the purge valve in dependence thereon.

To facilitate servicing and the diagnosis of faults, the processor 200 is provided with a communication or diagnostic port 210, arranged to permit service personnel to interrogate the processor 200 during regular maintenance to diagnose faults and to confirm that the fuel system is operating within pre-determined parameters. The processor 200 is arranged to perform regular self diagnosis routines and where a malfunction is identified, to notify the user via a fault warning indicator 220. The indicator 220 may be provided by a lamp or audible warning or both.

As described above, upon receiving a signal from the first probe 36A indicative of water contacting the first probe 36A, the processor 200 opens the purge valve 142, allowing the water to exit the filter 100. When the processor 200 receives a signal from the second probe 36B, indicative that the water level has dropped to that level then the processor 200 closes the purge valve 142.

In the example shown in Figure 6, the fuel filter 100 is further provided with a purge valve heater 142H. This heater is controlled by the processor 200 and activated when the signal from the ambient temperature sensor 310 indicates that there may be a risk of water purged from the filter 100 freezing in or around the purge valve 142. The purge valve heater 142H may also be activated prior to or during the start-up sequence of the engine to heat the fuel in the filter 100, reducing the viscosity of the fuel and improving fuel flow if the ambient conditions are sufficiently cold.

When the processor 200 operates the purge valve 142, the purge valve condition sensor 142A communicates the status of the purge valve 142 to the processor. The sensor 142A provides a closed loop control path for the processor 200, confirming that the purge valve 142 has operated successfully in dependence on the command from the processor 200. In addition, the sensor 142A may provide useful information with which the processor 200 may diagnose a fault or predict a potential component failure and inform the user accordingly. The purge valve sensor 142A is provided with a timer 142T. The timer 142T may be incorporated into the purge valve condition sensor 142A or the processor 200. The timer 142T is arranged to measure the duration of intervals when the purge valve 142 is open and closed respectively. This information is stored within the processor, and may be used as a diagnostic tool during regular maintenance; or may be used to provide an indication to the user as to the water content, and hence the quality, of the fuel being used. The processor 200 compares the data from the timer 142T with a record of the duration of the valve open and valve closed commands previously issued by the processor 200. A disparity between the duration of the commanded valve opening intervals and those determined by the purge valve condition sensor 142A, may indicate a malfunction of the fuel filter 100 such as the purge valve 142 not seating correctly or not returning to the closed condition. Such a condition may result in an undesirable loss of fuel via a malfunctioning purge valve 142. If the processor 200 determines such a condition it will indicate a fault via the warning indicator 220 to alert the user to the need for maintenance of the fuel filter 100 and of the associated purge valve 142.

An alternative arrangement employing two fuel filters of the present invention in series is shown in Figure 7. In Figure 7, the fuel system use two filters, a primary filter 1001 and a secondary filter 1002. A purge line 1001 p of the primary filter 1001 is connected to an inlet 1002i of the secondary filter 1002. A fuel tank 400 supplies fuel to the primary filter 1001 via an inlet 1001 i. The fuel is filtered by a filter element (not shown) and any water contamination in the fuel is purged via the purge line 1001 p. The filtered fuel is fed via an outlet 1001o to an intake system 500i of an internal combustion engine 500. The intake system 500i is arranged to supply fuel (F) and air (A) to the engine 500 in the conventional manner and comprises a fuel injection system 350 and an air intake 360.

The water purged from the primary filter 1001 may contain traces of fuel and so is filtered again by the secondary filter 1002. Any fuel in the water supplied to the secondary filter 1002 passes through a filter element (not shown) similar to that in the primary filter 1001 and is fed to the fuel injection system 350 via an outlet 1002o and a non-return valve 1002v. The non-return valve 1002v is arranged to prevent fuel in the fuel injection system 350 draining down into the secondary filter, which may adversely affect performance.

Water separated by the secondary filter 1002 is purged via a purge line 1002p in the manner described above. Water purged from the secondary filter 1002 may be directed into a catchment tank or other suitable device (not shown), or alternatively may be managed in the manner shown in the Figure.

The arrangement shown in Figure 7 further comprises a purge valve controller 1200 similar to that described in Figure 6. However, the purge valve controller 1200 is arranged to selectively send purged water from the secondary filter 1002 to a suitably configured exhaust system 500e or intake system 500i.

The operating temperature of the engine 500 is indicated to the purge valve controller 1200 by the engine management unit (not shown in Figure 7). When the purge valve controller 1200 determines that the engine 500 is operating at a sufficient temperature, the controller 1200 issues a purge to exhaust 1200e command. Upon issue of the purge to exhaust 1200e command, water purged from the secondary filter 1200 is sprayed into the hot exhaust system 500e, where it vaporizes and is thus safely vented to atmosphere.

When the purge valve controller 1200 determines, from communication with the engine management unit, that the engine 500 is operating under load, a purge to intake 1200i command is issued by the controller 1200. Upon issue of the purge to intake 1200i command, water purged from the secondary filter 1200 is sprayed into a suitably configured intake system where it is metered into the combustion chambers (not shown) of the engine 500. The injection of water into the combustion chambers of the engine reduces combustion temperature, reducing the risk of pre-detonation or knocking and improves exhaust gas emissions by decreasing the nitrogen oxide (NOₓ) content in the exhaust gas. Water injected into the combustion chambers in this way vaporizes and is vented to the atmosphere via the exhaust system 500e.

Other advantages will be apparent to one skilled in the art and the present examples and embodiments are to be considered illustrative and not restrictive. In particular, it will be appreciated that the fuel filter of the present invention is not limited to use in road vehicles, but may provide a significant advantage to fuel systems for trains or for off-road vehicles such as construction plant. The invention is not to be limited to the details given herein, but may be modified within the scope and equivalence of the appended claims.

## Claims

1. A system (100) for monitoring the level of water in a fuel filtration apparatus for an internal combustion engine (200) of a vehicle, the apparatus having a fuel filter (110) comprising a main body including a fuel inlet (110i), a fuel outlet (110o) and a water collection portion (128), the water collection portion including a sensor (134) for determining the level of water within the water collection portion (128);
the system (100) further comprising:
a control means (160);
a fuel tank (150) having a fuel volume sensor (152) arranged to determine the volume of fuel stored within the fuel tank (150); and
a global positioning system (GPS) (170) arranged to determine the location of the apparatus, wherein:
the control means (160) is arranged to generate a warning or fault code comprising the location of the apparatus if the level of water in the water collection portion (128) exceeds a pre-determined level;
**characterized in that**:
the system is arranged to determine the source of contaminated fuel, **in that**:
the control means (160) is in communication with the fuel volume sensor (152), and stores the location of the apparatus upon determining an increase in the volume of fuel stored in the tank (150); and **in that**:
the warning or fault code generated by the control means (160) further comprises the location of the apparatus when the control means (160) determined an increase in the volume of fuel stored in the tank (150).

2. The system (100) according to Claim 1, further comprising a memory, arranged to store the warnings generated by the control means (160), and wherein the warnings are stored on the memory in the form of fault codes.

3. The system (100) according to Claim 2, wherein the memory is configured to provide a diagnostic function which may be interrogated during regular maintenance of the system (100), allowing maintenance personnel to determine the frequency of use by a user of a contaminated fuel source.

4. The system (100) according to any preceding Claim further comprising a warning indicator (180), wherein the warning generated by the control means (160) is made known to a user by the warning indicator (180).

5. The system (100) according to Claim 4, wherein the warning comprises an identification of the location of the apparatus when the pre-determined level of water was exceeded.

6. The system (100) according to any preceding Claim, wherein the sensor (134) defines at least two level probes, each probe being arranged to detect the presence of water at a respective predetermined level.

7. The system (100) according to Claim 6, wherein the level probes comprise a conductivity probe (36).

8. The system (100) according to Claim 7, wherein the apparatus further comprises a conductive base (38) arranged in use to connect electrically to each conductivity probe (36) when the water reaches the respective predetermined level.

9. The system (100) of any preceding claim, wherein the control means (160) is configured to record the location of a filling station upon filling of the vehicle fuel tank (150), and the controller is further configured to generate an indication to the user of a partial volume of water within the volume of fuel acquired from said filling station.

10. The system (100) according to any preceding claim, wherein the fuel filter (110) comprises a purge valve (42) for automatically draining water from the filter (110).

11. A method of purging water from a fuel filter (110) for an internal combustion engine (200) of a vehicle, the vehicle comprising a system (100) according to claim 10, the method comprising:
opening the purge valve (42) automatically when the water level reaches a first predetermined level;
and closing the purge valve (42) when the water level reaches a second predetermined level.

12. A vehicle comprising a system (100) according to any one of claims 1 to 10.

## Patentansprüche

1. System (100) zum Überwachen des Wasserniveaus in einer Kraftstofffiltervorrichtung für einen Verbrennungsmotor (200) eines Fahrzeugs, wobei die Vorrichtung einen Kraftstofffilter (110) aufweist, der einen Hauptkörper mit einem Kraftstoffeinlass (110i), einem Kraftstoffauslass (110o) und einem Wassersammelabschnitt (128) umfasst, wobei der Wassersammelabschnitt einen Sensor (134) zum Bestimmen des Wasserniveaus in dem Wassersammelabschnitt (128) umfasst;
wobei das System (100) weiter Folgendes umfasst:
ein Steuermittel (160);
einen Kraftstofftank (150) mit einem Kraftstoffvolumensensor (152), der dazu angeordnet ist, das Volumen des in dem Kraftstofftank (150) gespeicherten Kraftstoffs zu bestimmen; und
ein GPS-System (Global Positioning System) (170), das dazu angeordnet ist, den Ort der Vorrichtung zu bestimmen, wobei:
das Steuermittel (160) dazu angeordnet ist, eine Warnung oder einen Fehlercode zu erzeugen, die bzw. der den Ort der Vorrichtung umfasst, wenn das Wasserniveau in dem Wassersammelabschnitt (128) ein vorherbestimmtes Niveau übersteigt;
**dadurch gekennzeichnet, dass**:
das System dazu angeordnet ist, die Quelle des verunreinigten Kraftstoffs zu bestimmen, dadurch, dass:
das Steuermittel (160) mit dem Kraftstoffvolumensensor (152) in Verbindung steht und den Ort der Vorrichtung speichert, wenn eine Zunahme des Volumens des in dem Tank (150) gespeicherten Kraftstoffs bestimmt wird; und dadurch, dass:
die bzw. der von dem Steuermittel (160) erzeugte Warnung bzw. Fehlercode weiter den Ort der Vorrichtung umfasst, als das Steuermittel (160) eine Zunahme des Volumens des in dem Tank (150) gespeicherten Kraftstoffs bestimmt hat.

2. System (100) nach Anspruch 1, weiter umfassend einen Speicher, der dazu angeordnet ist, die von dem Steuermittel (160) erzeugten Warnungen zu speichern und wobei die Warnungen in Form von Fehlercodes in dem Speicher gespeichert werden.

3. System (100) nach Anspruch 2, wobei der Speicher dazu ausgebildet ist, eine Diagnosefunktion vorzusehen, die während regelmäßiger Wartung des Systems (100) abgefragt werden kann, so dass Wartungspersonal die Häufigkeit der Verwendung einer verunreinigten Kraftstoffquelle durch einen Benutzer bestimmen kann.

4. System (100) nach einem der vorangehenden Ansprüche, weiter umfassend eine Warnungsanzeige (180), wobei die von dem Steuermittel (160) erzeugte Warnung einem Benutzer durch die Warnungsanzeige (180) gemeldet wird.

5. System (100) nach Anspruch 4, wobei die Warnung eine Identifizierung des Orts der Vorrichtung, als das vorherbestimmte Wasserniveau überschritten wurde, umfasst.

6. System (100) nach einem der vorangehenden Ansprüche, wobei der Sensor (134) mindestens zwei Niveausonden definiert, wobei jede Sonde dazu angeordnet ist, die Anwesenheit von Wasser an einem jeweiligen vorherbestimmten Niveau zu erkennen.

7. System (100) nach Anspruch 6, wobei die Niveausonden eine Leitfähigkeitssonde (36) umfassen.

8. System (100) nach Anspruch 7, wobei die Vorrichtung weiter eine leitfähige Basis (38) umfasst, die dazu angeordnet ist, in Gebrauch elektrisch mit jeder Leitfähigkeitssonde (36) in Verbindung zu treten, wenn das Wasser das jeweilige vorherbestimmte Niveau erreicht.

9. System (100) nach einem der vorangehenden Ansprüche, wobei das Steuermittel (160) dazu ausgebildet ist, den Ort einer Tankstelle beim Füllen des Fahrzeugkraftstofftanks (150) aufzuzeichnen und das Steuergerät weiter dazu ausgebildet ist, für den Benutzer eine Angabe eines Teilvolumens von Wasser in dem von der Tankstelle erworbenen Volumen von Kraftstoff zu erzeugen.

10. System (100) nach einem der vorangehenden Ansprüche, wobei der Kraftstofffilter (110) ein Ablassventil (42) zum automatischen Ablassen von Wasser aus dem Filter (110) umfasst.

11. Verfahren zum Ablassen von Wasser aus einem Kraftstofffilter (110) für einen Verbrennungsmotor (200) eines Fahrzeugs, wobei das Fahrzeug ein System (100) nach Anspruch 10 umfasst, wobei das Verfahren Folgendes umfasst:
automatisches Öffnen des Ablassventils (42), wenn das Wasserniveau ein erstes vorherbestimmtes Niveau erreicht;
und Schließen des Ablassventils (42), wenn das Wasserniveau ein zweites vorherbestimmtes Niveau erreicht.

12. Fahrzeug, das ein System (100) nach einem der Ansprüche 1 bis 10 umfasst.

## Revendications

1. Système (100) permettant de surveiller le niveau d'eau dans un appareil de filtration de carburant pour un moteur à combustion interne (200) d'un véhicule, l'appareil ayant un filtre à carburant (110) comprenant un corps principal comprenant une admission de carburant (110i), un refoulement de carburant (110o) et une portion de collecte d'eau (128), la portion de collecte d'eau comprenant un capteur (134) permettant de déterminer le niveau d'eau à l'intérieur de la portion de collecte d'eau (128) ;
le système (100) comprenant en outre :
un moyen de commande (160) ;
un réservoir à carburant (150) comportant un capteur de volume de carburant (152) agencé pour déterminer le volume de carburant stocké à l'intérieur du réservoir à carburant (150) ; et
un système de localisation mondial (GPS - global Positioning System) (170) agencé pour déterminer l'emplacement de l'appareil, dans lequel :
le moyen de commande (160) est agencé pour générer un code d'avertissement ou d'erreur comprenant l'emplacement de l'appareil si le niveau d'eau dans la portion de collecte d'eau (128) dépasse un niveau prédéterminé ;
**caractérisé en ce que** :
le système est agencé pour déterminer la source de carburant contaminé, **en ce que** :
le moyen de commande (160) est en communication avec le capteur de volume de carburant (152), et stocke l'emplacement de l'appareil lors de la détermination d'une augmentation du volume de carburant stocké dans le réservoir (150) ; et **en ce que** :
l'avertissement ou le code d'erreur généré par le moyen de commande (160) comprend en outre l'emplacement de l'appareil lorsque le moyen de commande (160) a déterminé une augmentation du volume de carburant stocké dans le réservoir (150).

2. Système (100) selon la revendication 1, comprenant en outre une mémoire, agencée pour stocker les avertissements générés par le moyen de commande (160), et dans lequel les avertissements sont stockés sur la mémoire sous la forme de codes d'erreur.

3. Système (100) selon la revendication 2, dans lequel la mémoire est configurée pour fournir une fonction de diagnostic qui peut être interrogée pendant la maintenance régulière du système (100), permettant au personnel de maintenance de déterminer la fréquence d'utilisation par un utilisateur d'une source de carburant contaminé.

4. Système (100) selon l'une quelconque des revendications précédentes, comprenant en outre un indicateur d'avertissement (180), dans lequel l'avertissement généré par le moyen de commande (160) est indiqué à un utilisateur par l'indicateur d'avertissement (180).

5. Système (100) selon la revendication 4, dans lequel l'avertissement comprend une identification de l'emplacement de l'appareil lorsque le niveau d'eau prédéterminé a été dépassé.

6. Système (100) selon l'une quelconque des revendications précédentes, dans lequel le capteur (134) définit au moins deux sondes de niveau, chaque sonde étant agencée pour détecter la présence d'eau à un niveau prédéterminé respectif.

7. Système (100) selon la revendication 6, dans lequel les sondes de niveau comprennent une sonde à conductivité (36).

8. Système (100) selon la revendication 7, dans lequel l'appareil comprend en outre une base conductrice (38) agencée en utilisation pour se connecter électriquement à chaque sonde à conductivité (36) lorsque l'eau atteint le niveau prédéterminé respectif.

9. Système (100) selon l'une quelconque des revendications précédentes, dans lequel le moyen de commande (160) est configuré pour enregistrer l'emplacement d'une station-service lors du remplissage du réservoir à carburant du véhicule (150), et l'unité de commande est en outre configurée pour générer une indication à l'utilisateur d'un volume d'eau partiel à l'intérieur du volume de carburant acquis à partir de ladite station-service.

10. Système (100) selon l'une quelconque des revendications précédentes, dans lequel le filtre à carburant (110) comprend une valve d'évacuation (42) permettant de drainer automatiquement l'eau du filtre (110).

11. Procédé d'évacuation d'eau d'un filtre à carburant (110) pour un moteur à combustion interne (200) d'un véhicule, le véhicule comprenant un système (100) selon la revendication 10, le procédé comprenant :
l'ouverture automatique de la valve d'évacuation (42) lorsque le niveau d'eau atteint un premier niveau prédéterminé ;
et la fermeture de la valve d'évacuation (42) lorsque le niveau d'eau atteint un second niveau prédéterminé.

12. Véhicule comprenant un système (100) selon l'une quelconque des revendications 1 à 10.
